# EUROPEAN PATENT APPLICATION

(11) **EP 3 530 378 A1**
(43) Date of publication of application: **28.08.2019**
(21) Application number: 19157037.3
(22) Date of filing: 13.02.2019
(51) Int. Cl.: B22F 1/00, B22F 3/00, C22C 1/04, B33Y 70/00, B33Y 10/00, C22C 14/00

(54) **METHODS FOR ADDITIVELY MANUFACTURING TURBINE ENGINE COMPONENTS VIA BINDER JET PRINTING WITH TITANIUM ALUMINIDE ALLOYS**

(30) Priority: 21.02.2018 US 201815901097
(71) Applicant: Honeywell International Inc., Morris Plains, NJ New Jersey 07950 (US)
(72) Inventor: GODFREY, Donald G., Morris Plains, NJ New Jersey 07950 (US); BAUGHMAN, Brian G., Morris Plains, NJ New Jersey 07950 (US); MADER, Morgan A., Morris Plains, NJ New Jersey 07950 (US); MORRIS, Mark C., Morris Plains, NJ New Jersey 07950 (US)
(74) Representative: Houghton, Mark Phillip

(57) **Abstract**

Methods for manufacturing an article include providing a three-dimensional computer model of the article and providing a metal alloy in powdered form. The metal alloy is a titanium aluminide alloy. The powdered form includes a grain size range of about 5 to about 20 microns and a d50 grain size average of about 10 to about 14 microns. The methods further include, at a binder jet printing apparatus, supplying the metal alloy and loading the three-dimensional model, and, using the binder jet printing apparatus, manufacturing the article in accordance with the loaded three-dimensional model in a layer-by-layer manner with the supplied metal alloy. A liquid binder is applied at each layer, and each layer has a thickness of about 10 to about 150 microns. The methods avoid remelting of the metal alloy and avoid metal alloy cooling rates of greater than about 100 °F per minute.

## Description

### TECHNICAL FIELD

The present disclosure generally relates to methods of manufacturing components using metal alloys. More particularly, the present disclosure relates to additively manufactured turbine components using binder jet printing with titanium aluminide alloys.

### BACKGROUND

High performance gas turbine engines have an ongoing need to reduce component weight without sacrificing mechanical properties in order to improve fuel burn and power to weight ratios. The same need also exists in other markets, such as the automotive industry, where performance and cost have a relationship to weight. Turbine components that must withstand operating temperatures above 1200 °F are often manufactured from materials such as Inconel® 718 or similar nickel-based super-alloys. Unfortunately, nickel-based super-alloys have a relatively high density, even though they have high temperature capabilities.

Low pressure turbine blades are typically made from nickel or cobalt based super-alloys and are one of the long lead-time components in gas turbine engine fabrication. In engine development programs, the first engine to test date is limited by the long schedule required to fabricate such turbine parts. Due to the expensive tooling and fabrication cost for these components, limited quantities of hardware may be purchased for development programs.

Titanium aluminide (TiAl) is a light weight turbine structural and blade material that offers significant weight saving and thus significant benefits in gas turbine engines. TiAl alloys have been developed that can withstand temperatures as high as 1300 °F (uncoated) and up to 1450 °F with oxidation coating. TiAl alloys have excellent strength but have much lower ductility than nickel based alloys. For a production engine, TiAl alloys offer a weight savings of approximately 45% when compared to a nickel-based material.

Accordingly, it is desirable to provide improved methods for manufacturing components from titanium aluminide alloys. Furthermore, other desirable features and characteristics of the present invention will become apparent from the subsequent detailed description and the appended claims, taken in conjunction with the accompanying drawings.

### BRIEF SUMMARY

According to various embodiments, exemplary methods for manufacturing an article include providing a three-dimensional computer model of the article and providing a metal alloy in powdered form. The metal alloy is a titanium aluminide alloy. The powdered form includes a grain size range of about 5 to about 20 microns and a d50 grain size average of about 10 to about 14 microns. The exemplary methods further include, at a binder jet printing apparatus, supplying the metal alloy and loading the three-dimensional model, and, using the binder jet printing apparatus, manufacturing the article in accordance with the loaded three-dimensional model in a layer-by-layer manner with the supplied metal alloy. A liquid binder is applied at each layer, and each layer has a thickness of about 10 to about 150 microns. Still further, the exemplary methods include performing one or more post-print processes selected from the group of: curing, powder removal, de-binding, sintering, hot isostatic pressing (HIP), and heat treating. The methods avoid remelting of the metal alloy and avoid metal alloy cooling rates of greater than about 100 °F per minute. For example, the exemplary methods avoid the use of directed energy beam additive manufacturing processes such as electron beam melting (EBM) and direct metal laser fusion (DMLF). The article may be a low pressure turbine blade for use in a propulsion gas turbine engine or an auxiliary power unit. Such turbine engines find application in various vehicles, such as aircraft.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DESCRIPTION OF THE DRAWINGS

The exemplary embodiments will hereinafter be described in conjunction with the following drawing figures, wherein like numerals denote like elements, and wherein:
FIGS. 1A and 1B show examples of exterior surface delamination, porosity, and cracking experienced when fusing TiAl alloys using DMLS;
FIG. 2 illustrates an exemplary binder jet printing apparatus, in the process of manufacturing an article, which is suitable for use with embodiments of the present disclosure; and
FIG. 3 is a process flow diagram illustrating method for manufacturing an article in accordance with some embodiments of the present disclosure.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

### Introduction

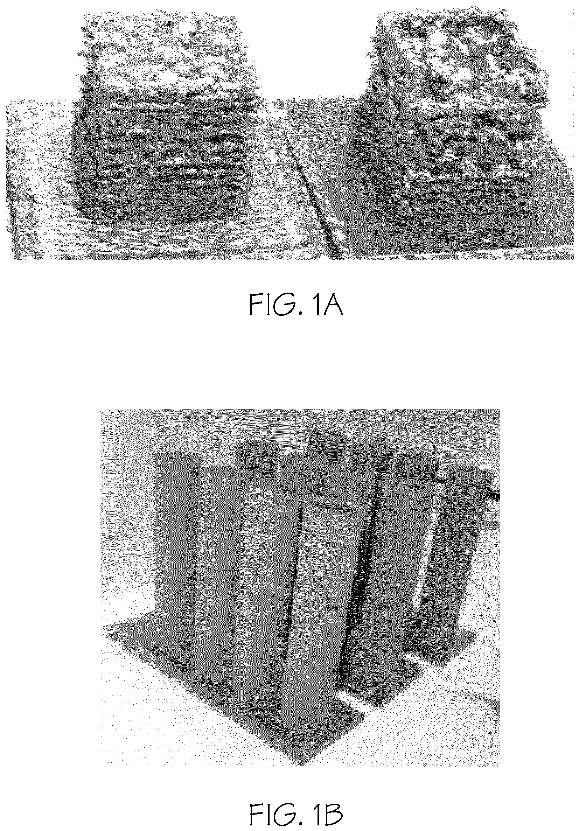

It has been found that fabricating TiAl alloys with additive manufacturing technology has not been successful thus far using directed energy methods such as direct metal laser sintering (DMLS) or electron beam melting (EBM), apparently due to the rapid thermal gradients and chemistry of the alloy. FIGS. 1A and 1B show examples of exterior surface delamination, porosity, and cracking experienced when fusing TiAl alloys using DMLS. This finding is in contrast to the work done with directed energy methods for other various other metal alloys used in the aerospace industry, such as nickel alloys (including Inco-718 and Inco-625), titanium alloys (including Ti64 and Ti6242), and aluminum alloys (AlSi10Mg and F357), where excellent results have been demonstrated.

As shown in FIGS. 1A and 1B, TiAl alloys cannot be easily welded and thus additive manufacturing methods utilizing DMLS or EBM have not yet yielded robust components with these materials. These prior art processes result in thermal gradients during the solidification process which cause thermo-mechanical strains in the crystalline lattice which then result in defects, cracking, and non-optimal microstructure (and thus reduced mechanical and life properties). Moreover, TiAl components fabricated using these traditional additive manufacturing methods exhibit significant exterior and interior roughness, which requires added steps of surface finishing to produce an acceptable component.

The present disclosure utilizes binder jet printing (BJP) technology to produce near-net shape components directly from TiAl alloys that cannot be easily welded. Using BJP technology enables the component to be formed layer-by-layer without the application of heat, thus avoiding many of the deficiencies in the prior art utilizing directed energy method, which result in rapid thermal gradients and associated deformation and cracking. The BJP process involves building or printing components layer-by-layer derived from an original 3D or CAD file. The BJP process employed in the present disclosure uses two materials: a TiAl metal powder based material and a binder. The binder is applied as a liquid and functions as an adhesive between two metal powder layers. The printer passes over the build surface and deposits the binder on relevant build areas based on information from the original 3D or CAD file. The printing process is repeated layer-by-layer until the component is formed in accordance with the original 3D or CAD file.

Because printing and binding of the metal powder occurs at room temperatures, there are no rapid thermal gradients like those common when utilizing laser based or electron beam based powder bed fusion methods. Also, because the embodiments disclosed herein do not utilize melting during building and utilize a very fine layer size and PSD, components can be produced with very fine geometric detail and tolerances. Furthermore, the present disclosure enables the production of complex geometries in a single operation without tooling and enables detailed near-net geometric features that prior art processing methods cannot produce. In particular, the present disclosure utilizes powders that are relatively small in grain size, such as a grain size range of about 5 to about 20 microns and a d50 grain size average of about 10 to about 14 microns, which results in finer detail in the finished printed component. The present disclosure also enables optimized isotropic mechanical properties such as yield, creep, and fatigue resistance which are desirable for high temperature low pressure turbine components.

Furthermore, unlike DMLS or EBM methods, the presently-described methods utilize no directed energy beams to create a component from TiAl alloys. Rather, the exemplary methods utilize a binder jet printing free-form additive manufacturing process to deposit a binder and the metal powder across the surface of the build plane to build a component by applying one layer of powder and one layer of binder per pass. Thus, the rapid solidification rates that result in cracking are avoided. Moreover, the loss of compositional elements is avoided, enabling enhanced microstructure control. In addition, distortion from powder bed process temperatures are eliminated, and support structures to minimize build cracking from thermal gradients are no longer needed. Moreover, the present disclosure reduces the surface roughness of the built components, thus eliminating the need for exterior and/or interior surface finishing. This results in more economical builds and in more robust builds over the prior art methods. Furthermore, the present disclosure enables parts to be formed closer to near-net where appropriate, which eliminates expensive machining costs associated with prior art post-build processes.

### TiAl Alloy

Exemplary methods for manufacturing an article include providing a metal alloy in powdered form. The metal alloy is a titanium aluminide alloy. Such alloys have the properties of good high-temperature strength and rigidity, resistance to oxidizing environments up to 1450 °F (788 °C) for prolonged exposures, and good long-term thermal stability. Furthermore, such alloys have a relatively low density of about 3.9 g/cm³.

TiAl alloys in accordance with the present disclosure may be Ti-48Al-2Cr-2Nb (atomic percentage) alloys. Accordingly, TiAl alloys in accordance with some embodiments of the present disclosure may be characterized by the following composition (TABLE 1), in weight-%:

**TABLE 1**

| Element | Min. Content | Max. Content |
|---|---|---|
| Titanium | 57 | 60 |
| Aluminum | 31 | 35 |
| Chromium | 2.4 | 2.7 |
| Niobium | 4.5 | 5.1 |
| Iron | 0 | 0.1 |
| Chromium | 0 | 0.02 |
| Oxygen | 0 | 0.12 |
| Boron | 0 | 0.03 |
| Hydrogen | 0 | 0.01 |

TiAl alloys in accordance with other embodiments of the present disclosure may be characterized by the following composition (TABLE 2), in weight-%:

**TABLE 2**

| Element | Min. Content | Max. Content |
|---|---|---|
| Titanium | 58 | 59 |
| Aluminum | 32.5 | 34.5 |
| Chromium | 2.4 | 2.7 |
| Niobium | 4.5 | 4.9 |
| Iron | 0 | 0.1 |
| Chromium | 0 | 0.02 |
| Oxygen | 0 | 0.12 |
| Boron | 0 | 0.03 |
| Hydrogen | 0 | 0.01 |

The powdered form of the TiAl alloy is produced by combining the various constituents (metals and other elements) of the alloy into a mixture, melting the mixture, and atomizing the melted mixture to form a powder, a process which is well-known in the art. The powdered form suitable for use in accordance with embodiments of the present disclosure may be characterized by a grain size range of about 5 to about 20 microns and a d50 grain size average of about 10 to about 14 microns, such as a grain size of about 10 to about 15 microns and a d50 grain size average of about 11 to about 13 microns. Powders that are characterized by this relatively small in grain size enable finer detail in the finished printed component.

### Binder Jet Printing

The BJP process involves building or printing components layer-by-layer derived from an original 3D or CAD file. The BJP process employed in the present disclosure uses two materials: a TiAl metal powder based material and a binder. The binder is applied as a liquid and functions as an adhesive between two metal powder layers. The printer passes over the build surface and deposits the binder on relevant build areas based on information from the original 3D or CAD file. The printing process is repeated layer-by-layer until the component is formed in accordance with the original 3D or CAD file.

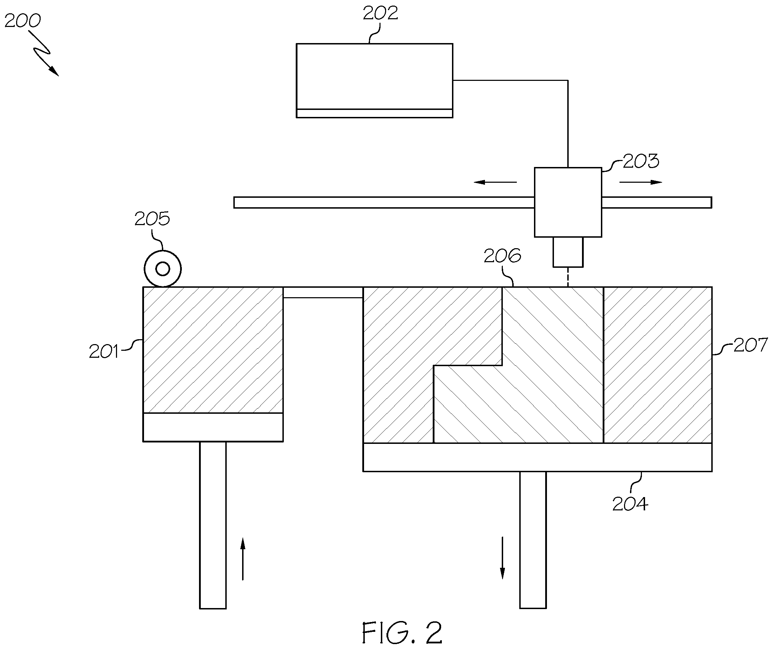

FIG. 2 illustrates an exemplary binder jet printing apparatus 200, in the process of manufacturing an article, which is suitable for use with embodiments of the present disclosure. The binder jet printing apparatus 200 uses two materials; TiAl metal powder based material 201 and liquid binder 202, which may be an organic or inorganic material, such as those used in MIM technologies. The liquid binder 202 acts as an adhesive between powder (201) layers. The binder 202 is usually in liquid form and the build material 201 in powder form. A print head 203 moves horizontally along the x and y axes (left/right arrows) of the apparatus 200. A roller 205 deposits a layer of powder build material 201 and the print head 203 deposits the binder 202. This is performed in alternating order to form the various layers of the build. After each layer, the article 206 being printed is lowered (up/down arrows) on its build platform 204. The article 206 being printed is self-supported within powder bed 207 and is removed from the unbound powder once completed.

In operation, the binder jet printing apparatus 200 operates in the following manner: First, the powder material 201 is spread over the build platform 204 using the roller 205. Next, the print head 203 deposits the binder adhesive 202 on top of the powder 201 where required. Next, the build platform 204 is lowered by the article's (206) layer thickness, which may be from about 10 to about 150 microns, such as from about 10 to about 100 microns, and for example from about 10 to about 50 microns. Next, another layer of powder 201 is spread over the previous layer. The article 206 is formed where the powder 201 is bound to the liquid binder 202. The unbound powder 201 remains in position surrounding the article 206. The process is repeated until the entire article 206 has been made.

Binder jet printing utilizes no directed energy beams to create the article 206 from TiAl alloys. Thus, the rapid solidification rates that result in microfissuring and cracking are avoided. In addition, distortion from powder bed process temperatures are eliminated, and support structures to minimize build cracking from thermal gradients are not needed. Binder jet printing is performed at room temperature. Moreover, binder jet printing does not require the use of a shielding gas, and accordingly there is reduced risk of gas entrapment in the finished article 206. Still further, there is no remelting of the article 206 after it has been manufactured.

### Method of Manufacture

According to various embodiments, exemplary methods for manufacturing an article include providing a three-dimensional computer model of the article. The exemplary methods further include, at the binder jet printing apparatus 200, supplying the TiAl metal alloy and loading the three-dimensional model, and, using the binder jet printing apparatus, manufacturing the article in accordance with the loaded three-dimensional model in a layer-by-layer manner with the supplied metal alloy, as described above. Still further, the exemplary methods include performing one or more post-print processes selected from the group of: curing, powder removal, de-binding, sintering, hot isostatic pressing (HIP), and heat treating.

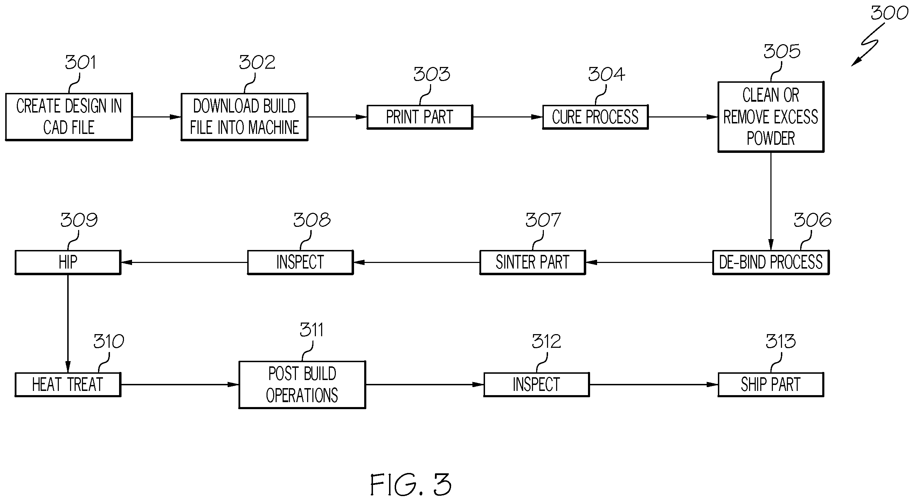

FIG. 3 is a process flow diagram illustrating a method 300 for manufacturing an article in accordance with some embodiments of the present disclosure. Method 300 begins at step 301, where a 3D or CAD file of the article is created. In some embodiments, the article may be a turbine engine component that is subjected to high temperatures during operation, such as a low pressure turbine blade, etc. In other embodiments, the article may be a component for use in any other system. The present disclosure is not limited to turbine engine components. At step 302, a build file is generated from the 3D or CAD file and is downloaded into a binder jet printing apparatus.

Method 300 continues at step 303 with the fabrication of the article at the binder jet printing apparatus, as described above. After fabrication, a curing process 304 is employed to cure the article, which may be performed at an elevated temperature over a period of time. Method 300 then continues at step 305 wherein the cured article is cleaned and/or has any excess powder removed. Thereafter, a de-binding process 306 may be employed to remove the residual binder from the article. The nature of de-binding depends on the type of binder employed, but may generally involve the use of subjecting the article to elevated temperatures, such as at least about 200 °F, and/or reduced pressures.

Method 300 continues at step 307 where the article is sintered. Sintering involves the use of elevated temperatures, such as at least about 2300 °F, to coalesce the powdered material into a solid mass, but without liquefaction. Sintering ensures adequate densification of the article. After sintering, the article may be inspected at step 308 to ensure that the solidified mass meets the appropriate design specifications and tolerances. As is conventional with turbine engine components, the article may thereafter be subjected to hot-isostatic pressing (HIP) at step 309 to remove any internal defects of faults, and/or further heat treated at step 310 as necessary to achieve an appropriate material phase constituency of the article.

Method 300 thereafter proceeds to any applicable post-build operations at step 311, such as machining the article to final specifications. The completed article may thereafter be inspected at step 312. If the inspection reveals no defects, the article may be shipped at step 313 to an appropriate facility for assembling a gas turbine engine (or other system), as per its intended use. It is therefore noted that none of the method steps of method 300 employ the use of directed energy additive manufacturing processes, such as DMLS or EMB. As such, the method avoids remelting of the metal alloy and avoids metal alloy cooling rates of greater than about 100 °F per minute.

Accordingly, the present disclosure has provided methods that utilize binder jet printing technology to produce near-net shape components directly from TiAl alloys that cannot be easily welded. Thus, the rapid solidification rates that appear to result in cracking are avoided. In addition, distortion from powder bed process temperatures is eliminated, and support structures to minimize build cracking from thermal gradients are no longer needed. This results in more economical builds and in more robust builds. The components also demonstrate less exterior and interior surface roughness, thus eliminating the need for surface finishing steps. Furthermore, the present disclosure has provided methods that enable parts to be formed closer to near-net where appropriate, which eliminates expensive machining costs associated with prior art post-build processes.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A method for manufacturing an article, comprising:
providing a three-dimensional computer model of the article;
providing a metal alloy in powdered form, wherein the metal alloy is a titanium aluminide alloy, wherein the powdered form comprises a grain size range of about 5-22 microns and a d50 grain size average of about 10-13 microns;
at a binder jet printing apparatus, supplying the metal alloy and loading the three-dimensional model; and
using the binder jet printing apparatus, manufacturing the article in accordance with the loaded three-dimensional model in a layer-by-layer manner with the supplied metal alloy, wherein a liquid binder is applied at each layer,
wherein the method avoids remelting of the metal alloy and avoids metal alloy cooling rates of greater than about 100 °F per minute.

2. The method of claim 1, wherein each layer of the supplied metal alloy has a thickness from about 10 to about 150 microns.

3. The method of claim 1, wherein each layer of the supplied metal alloy has a thickness from about 10 to about 100 microns.

4. The method of claim 1, wherein each layer of the supplied metal alloy has a thickness from about 10 to about 50 microns.

5. The method of claim 1, further comprising performing curing of the article at a temperature of at least about 200 °F.

6. The method of claim 1, further comprising performing sintering of the article at a temperature of at least about 2300 °F.

7. The method of claim 1, further comprising performing one or more post-print processes selected from the group consisting of: hot isostatic pressing (HIP), heat treating, and machining.

8. The method of claim 1, wherein the method avoids the use of directed energy beam additive manufacturing processes such as electron beam melting (EBM) and direct metal laser fusion (DMLF).

9. The method of claim 1, wherein the article comprises a turbine engine component.

10. The method of claim 1, wherein the titanium aluminide alloy comprises, by weight-%:
about 57 to about 60 percent titanium;
about 31 to about 35 percent aluminum;
about 2.4 to about 2.7 percent chromium; and
about 4.5 to about 5.1 percent niobium.

11. The method of claim 1, wherein the titanium aluminide alloy comprises, by weight-%:
about 58 to about 59 percent titanium;
about 32.5 to about 34.5 percent aluminum;
about 2.4 to about 2.7 percent chromium; and
about 4.5 to about 4.9 percent niobium.

12. The method of claim 1, wherein the method avoids the use of interior and/or exterior surface finishing processes.

13. The method of claim 1, wherein the liquid binder is an organic material or an inorganic material.

14. The method of claim 1, wherein the method avoids the use of a shielding gas during the step of manufacturing the article in the layer-by-layer manner.

15. The method of claim 1, wherein the article is not remelted after the step of manufacturing the article in the layer-by-layer manner.
